# FASCICULE DE BREVET EUROPEEN

(11) **EP 4 610 104 B1**
(45) Date de publication et mention de la délivrance du brevet: **08.04.2026**
(21) Numéro de dépôt: 25157594.0
(22) Date de dépôt: 13.02.2025
(51) Int. Cl.: B60N 3/00, B60K 35/53, B64D 11/00, B60R 11/02

(54) **SYSTÈME DE FIXATION AMOVIBLE D'UN ÉCRAN SUR UN TABLEAU DE BORD D'UN AÉRONEF, ET SYSTÈME DE VISUALISATION COMPRENANT UN TEL SYSTÈME DE FIXATION**
SYSTEM ZUR LÖSBAREN BEFESTIGUNG EINES BILDSCHIRMS AN EINEM ARMATURENBRETT EINES FLUGZEUGS UND ANZEIGESYSTEM MIT SOLCH EINEM BEFESTIGUNGSSYSTEM
SYSTEM FOR REMOVABLY ATTACHING A SCREEN TO AN INSTRUMENT PANEL OF AN AIRCRAFT, AND DISPLAY SYSTEM COMPRISING SUCH AN ATTACHMENT SYSTEM

(30) Priorité: 29.02.2024 FR 2402009
(43) Date de publication de la demande: 03.09.2025
(73) Titulaire: AIRBUS OPERATIONS (S.A.S.), 31060 Toulouse (FR)
(72) Inventeur: KAUFLING, Yannick, 31060 Toulouse Cedex 9 (FR); CROSTA, Franck, 31060 Toulouse Cedex 9 (FR); FOURCADE, Olivier, 31060 Toulouse Cedex 9 (FR); WILLOT, Nicolas, 31060 Toulouse Cedex 9 (FR); JAMET, Lionel, 31060 Toulouse Cedex 9 (FR)
(74) Mandataire: Airbus-OPS SAS

(56) Documents cités:
- CN-A- 113 022 458
- JP-A- 2020 117 003
- US-A1- 2013 200 119
- US-A1- 2014 246 468

## Description

### Domaine technique

La présente invention concerne un système de fixation amovible d'un écran sur un tableau de bord d'un poste de pilotage d'un aéronef, et un système de visualisation comprenant un écran et un tel système de fixation.

### Etat de la technique

On sait qu'il peut être utile ou nécessaire d'installer un écran additionnel sur le tableau de bord d'un aéronef, en particulier d'un avion de transport.

Plus particulièrement, bien que non exclusivement, il peut s'agir d'un écran destiné à aider à réaliser des tests pendant des vols de test de l'aéronef. Un tel écran de test peut, par exemple, être utilisé dans un système de simulation embaqué, tel que décrit dans la demande de brevet FR2005575. Cet écran de test est disposé devant un écran usuel de l'aéronef pendant une phase donnée du vol de test et peut être retracté pour libérer l'écran usuel lorsqu'il n'est plus utilisé.

Comme l'emploi d'un écran additionnel est en principe temporaire, il existe un besoin de trouver une solution permettant d'installer un écran additionnel sur le tableau de bord d'un poste de pilotage d'un aéronef, avec une installation et également une désinstallation simples et rapides, et ceci sans avoir à modifier les équipements du tableau de bord.

Le document US2014246468A1 décrit un support réglable permettant de fixer un écran à un véhicule. Le support comprend un rail longitudinal qui permet de faire coulisser l'écran le long de l'axe longitudinal. De plus, l'écran peut pivoter autour d'un axe vertical qui est perpendiculaire à l'axe longitudinal.

### Exposé de l'invention

La présente invention a pour objet de proposer une solution pour répondre au besoin précité. Elle concerne un système de fixation amovible d'au moins un écran sur un tableau de bord d'un poste de pilotage d'un aéronef.

Selon l'invention, ledit système de fixation comporte :
- un rail rectiligne présentant un axe longitudinal ;
- un dispositif de fixation destiné à fixer le rail sur le tableau de bord sans modification dudit tableau de bord ; et
- au moins un chariot mobile pourvu d'un dispositif de support, ledit chariot mobile étant configuré pour pouvoir être translaté le long dudit rail et être amené au moins dans une position dite d'opération, ledit dispositif de support étant pourvu d'une tablette de support destiné à porter l'écran, la tablette de support étant apte à pivoter autour d'un axe parallèle audit axe longitudinal et étant configuré pour, par son pivotement, pouvoir être relevée dans une configuration dite relevée, au moins dans ladite position d'opération, et pouvoir être abaissée sur le chariot mobile dans une configuration dite abaissée, au moins lors d'une translation dudit chariot mobile sur le rail.

Ainsi, grâce à l'invention, le système de fixation et également un écran additionnel porté par ce système de fixation, peuvent être installés facilement et rapidement sur le tableau de bord d'un poste de pilotage d'un aéronef (et également être désinstallés facilement et rapidement), et ceci sans modification du tableau de bord et des équipements du poste de pilotage.

Ledit système de fixation présente également d'autres avantages précisés ci-dessous.

Dans un mode de réalisation préféré, le chariot mobile est configuré pour pouvoir être amené, par translation sur le rail, dans une position d'extrémité sur ledit rail, et le dispositif de support est apte à pivoter par rapport à un panneau du chariot mobile, autour d'un axe qui est transversal audit axe longitudinal et il est configuré pour, par son pivotement, pouvoir, au moins dans ladite position d'extrémité du chariot mobile, être relevé dans une configuration dite de repos.

Avantageusement, ledit dispositif de support comprend, de plus, une tablette auxiliaire, et la tablette de support est apte à pivoter par rapport à ladite tablette auxiliaire par l'intermédiaire d'une charnière agencée à un premier côté, et elle est configurée pour pouvoir être amenée, par pivotement, dans l'une ou l'autre des deux configurations suivantes :
- la configuration abaissée, dans laquelle la tablette de support est rabattue sur la tablette auxiliaire de manière à ménager entre elles un logement destiné à recevoir l'écran et la tablette de support et la tablette auxiliaire sont solidarisées à un second côté opposé audit premier côté ; et
- une configuration relevée, dans laquelle la tablette de support est relevée par rapport à la tablette auxiliaire de sorte que la tablette de support et la tablette auxiliaire sont positionnées sensiblement orthogonalement l'une par rapport à l'autre.

De plus, de façon avantageuse, une première face de la tablette auxiliaire et une première face d'un plateau lié à un panneau du chariot mobile sont en contact l'une avec l'autre et sont liées l'une à l'autre par l'intermédiaire, d'une part, d'une pluralité de pions solidaires d'au moins l'une desdites premières faces, qui pénètrent dans des trous complémentaires et coopérants pratiqués dans l'autre desdites premières faces, et d'autre part, d'au moins un adhésif double face, dont chaque face est collée sur l'une desdites premières faces de la tablette auxiliaire et du plateau.

En outre, dans un mode de réalisation particulier, le système de fixation comporte un élément de verrouillage configuré pour pouvoir verrouiller le chariot mobile en position sur le rail.

Par ailleurs, avantageusement, le dispositif de fixation comprend deux pièces de fixation agencées sous le rail, chacune desdites pièces de fixation comprend une face inférieure destinée à être fixée sur l'un des deux repose-pieds destinés à un pilote de l'aéronef et une face supérieure à laquelle est fixé le rail, et est configurée pour que, lorsque le système de fixation est monté sur le tableau de bord, le rail est positionné sensiblement horizontalement.

En outre, dans un mode de réalisation particulier, le système de fixation comporte au moins une pièce d'appui agencée sous le rail.

Avantageusement, le système de fixation comporte également un bras pivotant apte à pivoter autour d'un axe transversal audit axe de manière à pouvoir être amené dans l'une ou l'autre des deux positions suivantes :
- une position escamotée, dans laquelle il est escamoté dans un panneau du chariot mobile ; et
- une position inclinée, dans laquelle une extrémité libre du bras pivotant pénètre dans une ouverture d'un plateau du dispositif de support pour maintenir le dispositif de support dans une configuration de repos.

Par ailleurs, dans un mode de réalisation particulier, le système de fixation comporte également des attaches auto-agrippantes pour attacher ensemble différents éléments du système de fixation.

La présente invention concerne également un système de visualisation pour un tableau de bord d'un poste de pilotage d'un aéronef, ledit système de visualisation comportant au moins un écran.

Selon l'invention, ledit système de visualisation comporte, de plus, un système de fixation amovible tel que décrit ci-dessus, sur lequel est fixé l'écran et qui est destiné à être fixé sur le tableau de bord du poste de pilotage de l'aéronef.

### Brève description des figures

Les figures annexées feront bien comprendre comment l'invention peut être réalisée. Sur ces figures, des références identiques désignent des éléments semblables.
La figure 1 est une vue partielle, en perspective, d'une partie interne d'un poste de pilotage d'un aéronef, pourvue d'un système de visualisation selon un mode de réalisation de l'invention, comprenant un dispositif de support dans une configuration relevée, dans une position d'opération.
La figure 2 est une vue similaire à celle de la figure 1, avec le dispositif de support dans une configuration abaissée.
La figure 3 est une vue latérale du système de visualisation avec le dispositif de support dans la configuration relevée comme sur la figure 1.
La figure 4 est une vue latérale du système de visualisation avec le dispositif de support dans la configuration abaissée comme sur la figure 2.
La figure 5 est une vue partielle, en perspective, d'une partie interne du poste de pilotage de l'aéronef, pourvue du système de visualisation, avec le dispositif de support, dans une configuration de repos, dans une position d'extrémité.
La figure 6 est une vue éclatée, en perspective, vue du bas, d'une partie d'un rail, pourvue d'un dispositif de support portant un écran.
La figure 7 est une vue similaire à celle de la figure 6, vue légèrement de haut.
La figure 8 est une vue en perspective d'un rail pourvu d'un chariot mobile et d'un plateau.
La figure 9 est une vue transversale d'une partie d'un rail, pourvue d'un panneau et d'un élément de verrouillage.
La figure 10 est une vue en perspective d'une partie d'un rail, fixée à un repose-pied.
La figure 11 est une vue légèrement en perspective d'une charnière du dispositif de support, liant une tablette de support à une tablette auxiliaire.

### Description détaillée

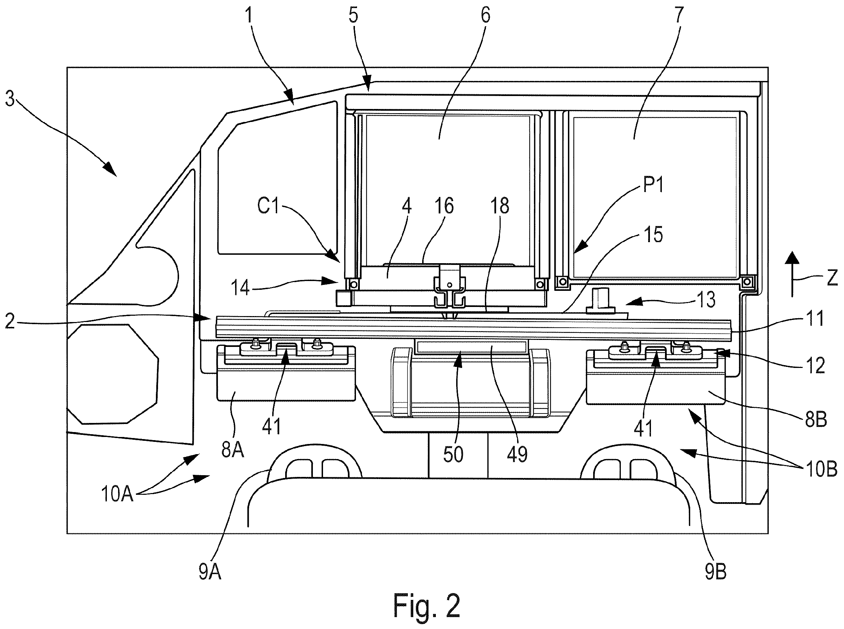

Le système 1 permettant d'illustrer l'invention et représenté de façon schématique, dans un mode de réalisation particulier, sur les figures 2 à 5, est destiné être monté sur un tableau de bord 2 d'un poste de pilotage 3 d'un aéronef, en particulier d'un avion de transport.

Plus précisément, le système 1 est destiné à fixer au moins un écran 4 sur le tableau de bord 2. Le système 1 et l'écran 4 font partie d'un système de visualisation 5. L'écran 4 peut être tout type d'écran additionnel dont un pilote de l'aéronef pourrait avoir besoin, et notamment un écran destiné à être utilisé lors de la réalisation de tests.

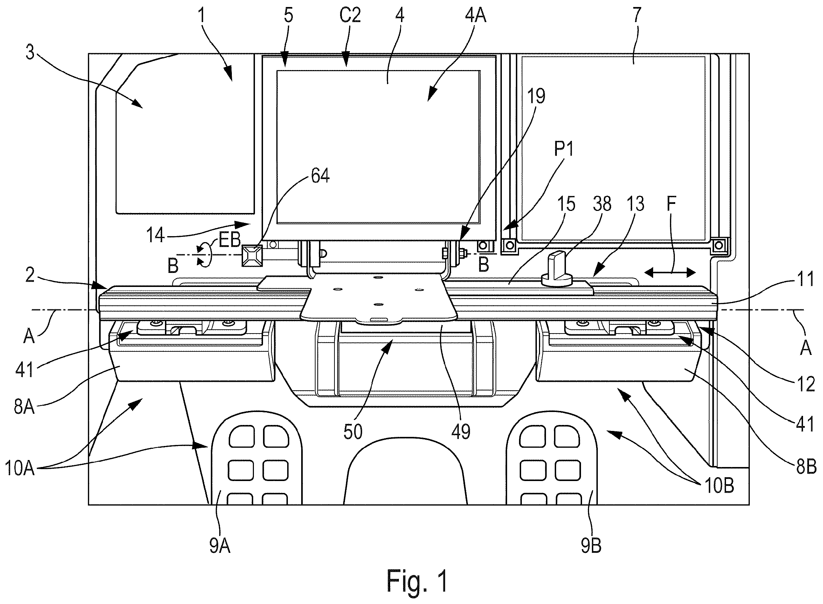

Sur les figures 1 et 2, on a représenté une partie du poste de pilotage 3, au niveau du siège d'un pilote. La partie représentée du poste de pilotage 3 comporte, notamment, le tableau de bord 2, deux écrans 6 et 7 usuels (dont seul l'écran 7 est visible sur la figure 1) et deux systèmes de repose-pied 10A et 10B. Chaque système de repose-pied 10A, 10B comprend un repose-pied 9A, 9B, et un support 8A, 8B de soutien du repose-pied 9A, 9B, qui est fixé dans le poste de pilotage 3.

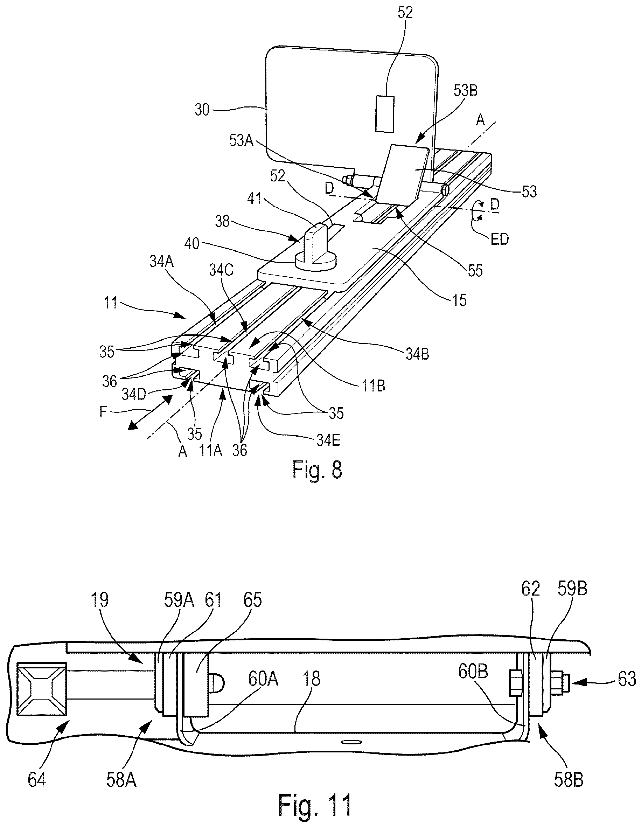

Le système 1 qui peut être agencé au niveau du siège de l'un ou l'autre des deux pilotes de l'aéronef, comporte, comme représenté sur la figure 1 :
- un rail 11 rectiligne présentant un axe longitudinal A-A (figures 1 et 8) ;
- un dispositif de fixation 12 destiné à fixer (de façon amovible) le rail 11 sur le tableau de bord 2, sans modification dudit tableau de bord 2, comme précisé ci-dessous ; et
- au moins un chariot mobile 13 pourvu d'un dispositif de support 14 destiné à recevoir l'écran 4.

La description suivante concerne un système 1 pourvu d'un seul chariot mobile 13 (comprenant un dispositif de support 14 portant un écran 4). Toutefois, il est également envisageable, dans le cadre de la présente invention, que le système 1 comporte une pluralité de chariots mobiles (et notamment deux chariots mobiles) montés sur un seul et même rail, chacun des chariots mobiles comprenant un dispositif de support portant un écran.

Dans le cadre de la présente invention :
- les adjectifs « supérieur » et « inférieur » sont définis par rapport à une direction verticale dans le poste de pilotage 3 lorsque le système 1 est monté sur l'aéronef, illustrée par une flèche Z sur la figure 2, l'adjectif « supérieur » étant défini dans le sens de la flèche Z et l'adjectif « inférieur » étant défini dans le sens opposé à celui de la flèche Z ; et
- l'adjectif « horizontal » correspond à une surface qui est positionnée sensiblement horizontalement lorsque l'aéronef est au sol, à savoir qui est orthogonale à la direction illustrée par la flèche Z.

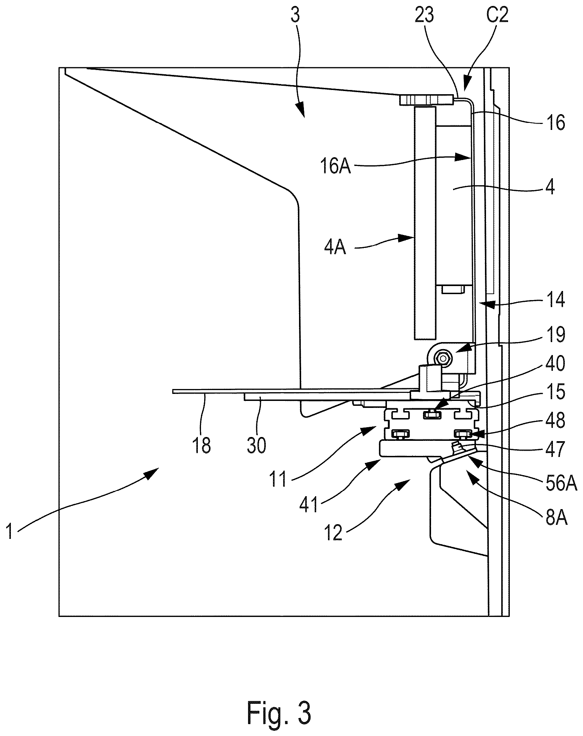

Le chariot mobile 13 comporte un panneau 15 correspondant à une plaque rectangulaire longitudinale, qui est apte à coulisser sur le rail 11, et auquel est lié le dispositif de support 14, comme représenté notamment sur les figures 3, 4 et 6.

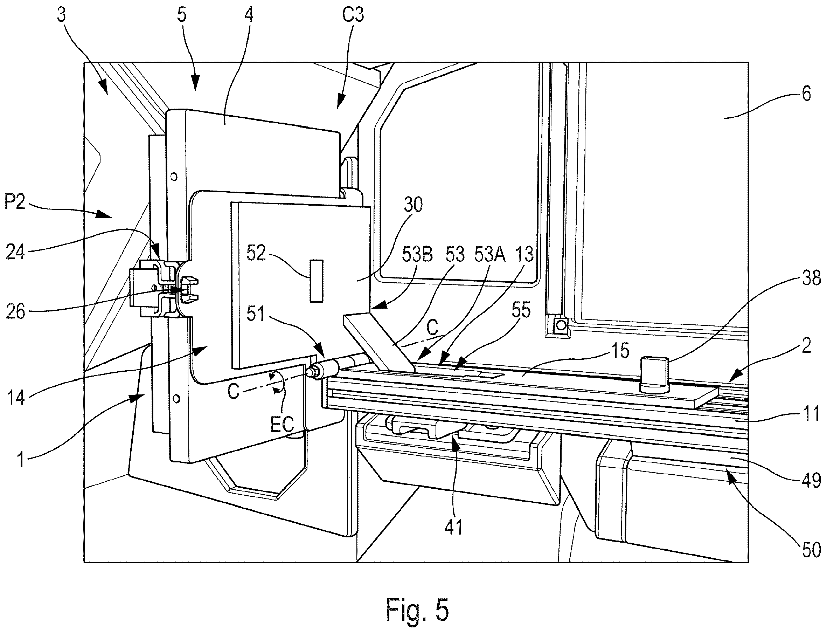

Le chariot mobile 13 est configuré pour pouvoir être translaté le long du rail 11 (dans une direction parallèle à l'axe longitudinal A-A), comme illustré par une double flèche F sur les figures 1 et 8, et il peut être amené le long dudit rail 11, notamment :
- dans une position dite d'opération P1, telle que représentée sur les figures 1 et 2 ; et
- dans une position d'extrémité P2, telle que représentée sur la figure 5.

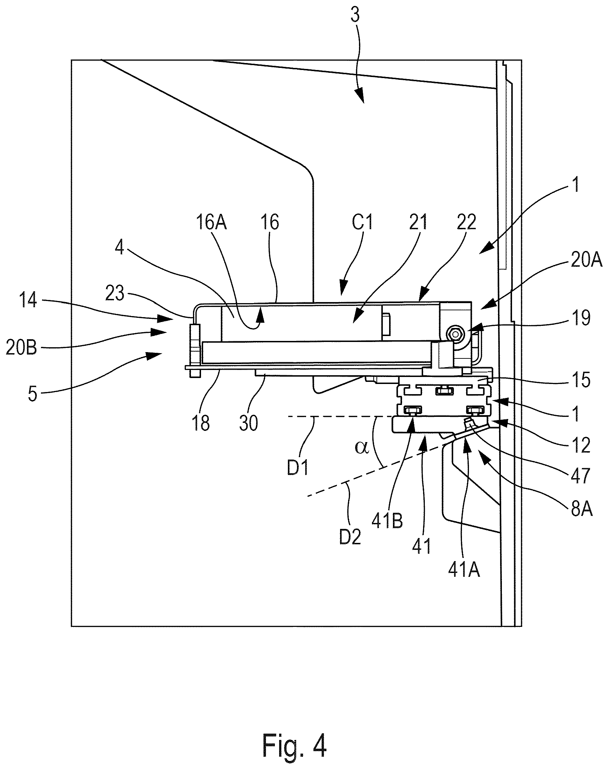

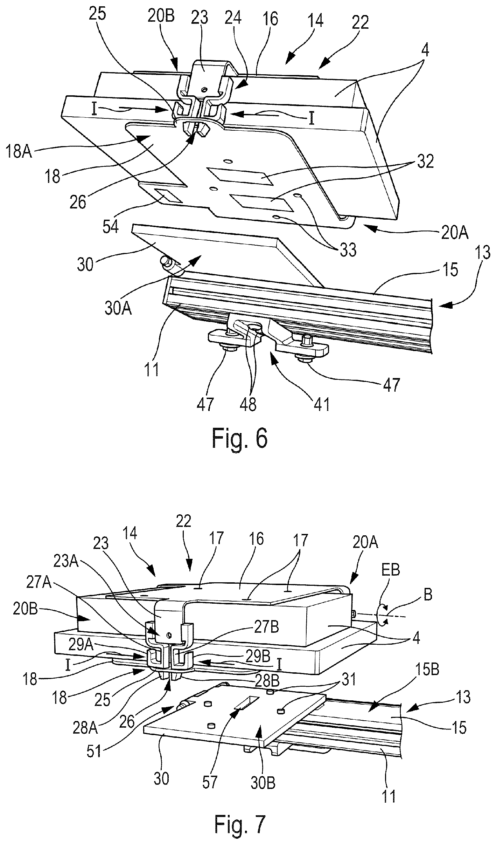

Le dispositif de support 14 comprend une tablette de support 16 (figures 3, 4 et 7) correspondant à une plaque plane, qui est destinée à porter l'écran 4. Pour ce faire, l'écran 4 est fixé de façon usuelle sur une face 16A (figures 3 et 4) de la tablette de support 16. De préférence, l'écran 4 est fixé par des vis 17, dont les têtes sont représentées schématiquement sur la figure 7.

Dans un mode de réalisation préféré, la tablette de support 16 (par exemple la position de trous pour le passage des vis 17) est adaptée aux fixations prévues sur l'écran 4 qui est utilisé. Ceci permet d'adapter facilement le système 1 à des écrans présentant des positions différentes pour les points de fixation.

Le dispositif de support 14 comprend, de plus, une tablette auxiliaire 18 correspondant à une plaque plane, comme représenté sur les figures 3 et 4.

La tablette de support 16 est apte à pivoter par rapport la tablette auxiliaire 18 par l'intermédiaire d'une charnière 19 usuelle, agencée à un côté 20A (figure 4). La tablette de support 16 est apte à pivoter, autour d'un axe B-B, comme illustré par une double flèche EB sur les figures 1 et 7. Cet axe B-B est parallèle audit axe longitudinal A-A.

La tablette de support 16 est configurée pour pouvoir être amenée, par pivotement, dans l'une ou l'autre des deux configurations suivantes : une configuration abaissée et une configuration relevée (ou de présentation).

Dans la configuration abaissée C1, représentée sur la figure 4 notamment, la tablette de support 16 est rabattue sur la tablette auxiliaire 18 de manière à ménager entre elles un logement 21 destiné à recevoir l'écran 4.

Dans la configuration abaissée C1, la tablette de support 16 est liée à la tablette auxiliaire à un côté 20B opposé audit côté 20A de manière à ce qu'elles forment une coque de support 22 (partiellement ouverte).

Comme représenté sur les figures 6 et 7, la tablette de support 16 est pourvue du côté 20B d'une plaque plane 23 liée par un coude à la tablette de support 16. Une pince 24 est fixée à l'extrémité libre 23A de cette plaque 23.

La tablette auxiliaire 18 est munie du côté 20B (opposé au côté 20A) d'une plaquette 25 saillante pourvue d'une ouverture 26. La pince 24 est configurée pour pouvoir être accrochée dans l'ouverture 26, comme représenté sur la figure 7. Pour ce faire, la pince 24 comprend deux bras flexibles 27A et 27B pourvus, chacun, à son extrémité libre d'un crochet 28A et 28B. Dans la configuration abaissée C1, la pince 24 pénètre dans l'ouverture 26 et est accrochée par ses crochets 28A et 28B aux bords de cette ouverture 26.

Une équerre 29A, 29B (en forme de L) est liée à chaque bras flexible 27A, 27B. Une pression sur les équerres 29A et 29B, dans le sens illustré par des flèches I sur les figures 6 et 7, permet d'approcher les bras 27A et 27B l'un de l'autre et de libérer les crochets 28A et 28B qui peuvent alors être extraits de l'ouverture 26. Ceci permet de soulever la tablette de support 16 (qui pivote autour de la charnière 19) et de désolidariser les deux tablettes 16 et 18 du côté 20B.

Dans la configuration relevée C2, représentée sur la figure 3, la tablette de support 16 est relevée par rapport à la tablette auxiliaire 18 de sorte que la tablette de support 16 et la tablette auxiliaire 18 sont positionnées sensiblement orthogonalement l'une par rapport à l'autre.

Comme la tablette auxiliaire 18 reste sur le rail 11 agencé en position horizontale (tel que précisé ci-dessous), la tablette de support 16 est ainsi amenée dans une position verticale. Dans cette position verticale, une face 4A de l'écran 4 (fixé sur la face 16A de la tablette de support 16) est visible, comme représenté sur les figures 1 et 3. La face 4A est la face d'affichage ou de présentation d'informations de l'écran 4. Dans cette configuration relevée C2, l'écran 4 peut donc être utilisé par le pilote.

Pour passer de la configuration abaissée C1 à la configuration relevée C2, la tablette de support 16 est donc pivotée par rapport à la tablette auxiliaire 18 par l'intermédiaire de la charnière 19 à pivot, pourvue de deux articulations 58A et 58B. Comme représenté sur la figure 11, la charnière 19 comprend des plaquettes 59A et 59B liées à la tablette de support 16 qui coopèrent, respectivement, avec des plaquettes 60A et 60B liées à la tablette auxiliaire 18. A l'articulation 58A, une rondelle 61 est agencée entre les plaquettes 59A et 60A, et à l'articulation 58B, une rondelle 62 est agencée entre les plaquettes 59B et 60B. Une pièce de liaison 63 qui traverse les trous des plaquettes 59B et 60B et de la rondelle 62 lient ensemble ces pièces. A l'articulation 58A, les plaquettes 59A et 60A et la rondelle 61 sont liées ensemble par l'intermédiaire d'une molette 64 pourvue d'un écrou 65.

La molette 64, en étant vissé, permet de générer une contrainte sur l'articulation 58A pour verrouiller son mouvement et ainsi empêcher le pivotement de la tablette de support 16 par rapport à la tablette auxiliaire 18. La molette 64 est configurée pour empêcher que la tablette auxiliaire 18 pivote par rapport à la tablette de support 16 dans la configuration relevée C2 et reste dans sa position verticale.

Dans un mode de réalisation particulier, les rondelles 61 et 62 comprennent des billes poussoirs permettant de générer une force de maintien en position dans une position relative prédéfinie entre les deux tablettes 16 et 18, en l'occurrence lorsqu'elles sont positionnées sensiblement orthogonalement l'une par rapport à l'autre dans la configuration relevée C2.

Par ailleurs, le dispositif de support 14 comprend de plus un plateau 30, comme représenté sur les figures 6 et 7 notamment.

Le plateau 30 est lié par une face 30A inférieure (figure 6) à une face 15B supérieure (figure 7) du panneau 15, comme précisé ci-dessous.

De plus, la tablette auxiliaire 18 de la coque de support 22 est lié audit plateau 30. Plus précisément, la face 18A inférieure (figure 6) de la tablette auxiliaire 18 et une face 30B supérieure (figure 7) du plateau 30 sont en contact l'une avec l'autre. Ces faces 18A et 30B sont liées l'une à l'autre par l'intermédiaire d'une pluralité de pions 31 (figure 7) et d'au moins un ruban adhésif 32 double face (figure 6), c'est-à-dire un ruban dont les deux faces sont adhésives.

L'une des faces adhésives du ruban adhésif 32 double face est ainsi collée sur la face 18A inférieure de la tablette auxiliaire 18 et l'autre face adhésive du ruban adhésif 32 double face est collée sur la face 30B supérieure du plateau 30. Sur l'exemple de la figure 6, deux rubans adhésifs 32, de forme rectangulaire, sont prévus sur la face 18A de la tablette auxiliaire 18.

En outre, comme représenté sur la figure 7, les pions 31 sont fixés sur la face 30B supérieure du plateau 30 et, dans la position assemblée de la tablette auxiliaire 18 et du plateau 30, les pions 31 pénètrent dans des trous 33 (figure 6) complémentaires et coopérants, pratiqués dans la face 18A inférieure de la tablette auxiliaire 18. Bien entendu, il est également envisageable de prévoir les pions sur la face 30B et des trous coopérants sur la face 18A, ou bien de prévoir des pions sur les deux faces 18A et 30B, associés à des trous pratiqués à chaque fois sur la face opposée.

Les moyens d'attache de la coque de support 22 (pourvue de l'écran 4) sur le plateau 30 lié au rail 11, qui comprennent les pions 31 et les rubans adhésifs 32, permettent :
- d'une part, d'apporter une attache suffisante pour les différentes opérations à réaliser ; et
- d'autre part, de détacher ou d'arracher la coque de support 22 (et l'écran 4) du système 1, en tirant manuellement la coque de support 22 dans le sens de la flèche Z dans la configuration abaissée (figure 2).

Ceci permet, notamment en cas d'urgence, au pilote d'enlever très rapidement l'écran 4 (entouré de la coque de support 22) du tableau de bord 2.

Dans un mode de réalisation préféré, notamment la tablette auxiliaire 18 et le plateau 30 sont réalisés par un procédé de fabrication additive, ce qui permet de réduire le coût de fabrication de ces pièces et ainsi du système 1. De plus, ces pièces peuvent, dans ce cas, être réalisées facilement.

Comme indiqué ci-dessus, le chariot mobile 13 est configuré pour pouvoir être translaté le long du rail 11, comme illustré par une double flèche F sur les figures 1 et 8, et il peut être amené le long dudit rail 11, notamment :
- dans la position d'opération P1 représentée sur les figures 1 et 2 ; et
- dans la position d'extrémité P2 représentée sur la figure 5.

Le chariot mobile 13 peut ainsi être amené dans la position souhaitée par le pilote, afin que l'écran 4 soit disposé exactement à l'endroit voulu par le pilote dans la configuration relevée, à savoir de préférence à l'intérieur de son champ de vision lorsqu'il est assis sur son siège pour lui éviter d'avoir à tourner la tête lorsqu'il veut regarder l'écran 4.

Pour ce faire, dans un mode de réalisation particulier, le rail 11 qui est par exemple réalisé en métal et notamment en aluminium, comporte, comme représenté sur la figure 8, trois guides 34A, 34B et 34C rectilignes, parallèles à l'axe longitudinal A-A, à savoir un guide 34C central et deux guides 34A et 34B agencés de part et d'autre de ce guide 34C central.

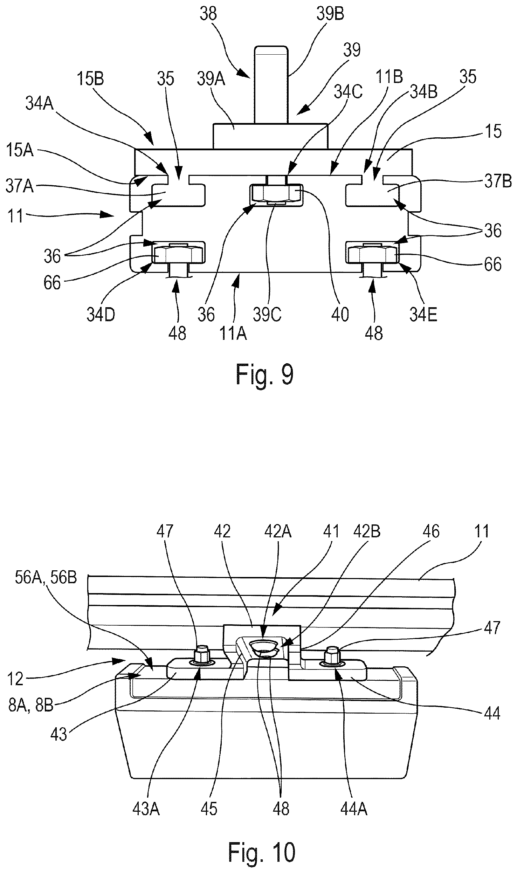

Les trois guides 34A, 34B et 34C (figure 9) présentent une forme similaire en section transversale, comprenant sur la face 11B supérieure du rail 11 une rainure longitudinale 35, débouchant dans une gorge 36 longitudinale de forme générale sensiblement rectangulaire.

Le panneau 15, quant à lui, est pourvu sur sa face 15A inférieure de deux nervures 37A et 37B longitudinales. Ces nervures 37A et 37B longitudinales présentent en section transversale, une forme générale rectangulaire, complémentaire de celle des gorges 36, et elles sont insérées dans les gorges 36 des deux guides 34A et 34B.

Cette coopération de forme entre les nervures 37A et 37B et les gorges 36 permettent au panneau 15 d'être maintenu sur le rail 11 et de pouvoir être déplacé longitudinalement sur le rail 11.

Par ailleurs, dans un mode de réalisation particulier, le système 1 comporte également un élément de verrouillage 38 (figure 9) pour verrouiller le panneau 15 et donc le chariot mobile 13, en position, sur le rail 11, c'est-à-dire pour empêcher le déplacement du chariot mobile 13 lorsqu'il est verrouillé.

L'élément de verrouillage 38 comprend une vis 39 pourvue d'une tête 39A (comprenant une plaque de préhension 39B) et d'une tige filetée 39C, comme représenté sur la figure 9.

La tête 39A de l'élément de verrouillage 38 repose sur la face 15B supérieure du panneau 15 et la tige filetée 39C traverse la rainure 35 du guide 34C et aboutit dans la gorge 36 du guide 34C. Un écrou 40 est logé dans cette gorge 36 et est vissé sur la tige filetée 39C.

Ainsi :
- pour verrouiller en position le chariot mobile 13 sur le rail 11, il suffit de visser l'élément de verrouillage 38 (en tournant manuellement la plaque de préhension 39B), jusqu'à obtenir un serrage entre l'écrou 40 et la tête 39A qui est suffisant pour maintenir le panneau 15 contre le rail 11 ; et
- pour déverrouiller le chariot mobile 13 de manière à permettre sa translation le long du rail 11, il suffit de desserrer suffisamment l'élément de verrouillage 38 jusqu'à permettre au panneau 15 de pouvoir être déplacé par rapport au rail 11.

Par ailleurs, le rail 11 comporte également, comme représenté sur les figures 8 et 9, deux guides 34D et 34E rectilignes, parallèles à l'axe longitudinal A-A, qui sont destinés à la fixation du rail 11 comme précisé ci-dessous.

Dans le mode de réalisation représenté, les guides 34D et 34E présentent une forme similaire en section transversale à celle des guides 34A, 34B et 34C, comprenant sur la face 11A inférieure du rail 11 une rainure longitudinale 35, débouchant dans une gorge 36 de forme générale sensiblement rectangulaire.

Par ailleurs, le dispositif de fixation 12 comprend deux pièces de fixation 41, agencées sous le rail 11, au niveau respectivement des supports 8A et 8B des repose-pieds 9A et 9B.

Ces pièces de fixation 41 ont pour fonction de permettre de fixer le système 1 (porteur de l'écran 4) sur l'aéronef. L'une des pièces de fixation 41 est destinée à être fixée sur le support 8A du repose-pied 9A et l'autre pièce de fixation 41 est destinée à être fixée sur le support 8B du repose-pied 9B.

Comme représenté sur la figure 10, chaque pièce de fixation 41 comprend une plaque centrale 42 et deux plaques latérales 43 et 44 agencées de part et d'autre de la plaque centrale 42 et liées à cette dernière, respectivement, par des plaquettes 45 et 46.

Chacune des plaques latérales 43 et 44 est pourvue d'un trou 43A, 44A et est apte à être fixée par l'intermédiaire d'un boulon 47 sur le support 8A, 8B d'un repose-pied 9A, 9B.

De façon usuelle, chaque support 8A, 8B d'un repose pied 9A, 9B comprend deux trous préexistants, qui sont destinés à recevoir un cache qui est retiré avant de fixer la pièce de fixation 41. Les trous 43A et 44A des plaques latérales 43 et 44 de la pièce de fixation 41 sont formés et positionnés pour pouvoir être superposés aux trous préexistants des supports 8A et 8B.

Ainsi, le rail 11 et donc le système 1 peuvent être fixés sur l'aéronef sans avoir à modifier le tableau de bord 2 ou des équipements du poste de pilotage de l'aéronef, en utilisant des trous existant déjà dans les supports 8A et 8B des repose-pieds 9A et 9B.

De plus, deux trous 42A et 42B sont pratiqués dans la plaque centrale 42 pour permettre de la fixer sous le rail 11 à l'aide de deux éléments de fixation 48, de préférence des boulons, traversant ces trous 42A et 42B et comprenant des écrous 66 agencés respectivement dans les gorges 36 des guides 34D et 34E, comme représenté sur la figure 9.

La face supérieure 56A, 56B de chaque support 8A, 8B de repose-pied 9A, 9B ne présente pas une surface horizontale. Aussi, les pièces de fixation 41 agencées sur ces faces supérieures 56A et 56B sont formées de manière à positionner le rail 11 horizontalement.

Pour ce faire, pour chacune des pièces de fixation 41, la face supérieure 41B (de la plaque centrale 42) et les faces inférieures 41A (des plaques latérales 43 et 44), illustrées sur la figure 4 respectivement par des segments de droite D1 et D2 en tirets, forment entre elles un angle α, non nul. Cet angle α est tel que, lorsque le système 1 est installé sur le tableau de bord 2, le rail 11 est dans une position horizontale.

Par conséquent, les pièces de fixation 41 sont configurées de manière :
- à pouvoir être fixées sur les supports 8A et 8B des repose-pieds 9A et 9B ; et
- à pouvoir être fixées sous le rail 11, pour le positionner horizontalement.

Par ailleurs, le système 1 comporte également une pièce d'appui 49 représentée sur les figures 1 et 2. Cette pièce d'appui 49 est agencée entre la face inférieure du rail 11 et la face supérieure d'une tablette 50 usuelle du tableau de bord 2, qui se trouve dans une position repliée, pour assurer un maintien supplémentaire du rail 11.

Par ailleurs, le plateau 30 est relié par l'intermédiaire d'une charnière 51 usuelle au panneau 15, comme représenté sur la figure 5.

Comme indiqué ci-dessus, le chariot mobile 13 est configuré pour pouvoir être amené, par translation sur le rail 11, dans une position d'extrémité P2 sur ledit rail 11, telle que celle représentée sur la figure 5.

Dans la position d'extrémité P2, le plateau 30 du dispositif de support 14 est apte à pivoter par rapport au panneau 15 du chariot mobile 13, autour d'un axe C-C (qui est transversal, et de préférence orthogonal, audit axe longitudinal A-A), comme illustré par une double flèche EC sur la figure 5.

Dans cette position d'extrémité P2, le dispositif de support 14 est ainsi configuré pour pouvoir être amené, par le pivotement du plateau 30 autour de l'axe C-C, dans l'une ou l'autre des deux configurations suivantes :
- la configuration abaissée C1, dans laquelle le plateau 30 est en contact avec le panneau 15 et le dispositif de support 14 est donc abaissée sur le chariot mobile 13 ; et
- une configuration de repos C3, dans laquelle le plateau 30 et donc le dispositif de support 14 sont relevés, comme représenté sur la figure 5.

Dans cette configuration de repos C3, le dispositif de support 14 et l'écran 4 sont positionnés afin de ne pas gêner ou de gêner le moins possible le pilote.

Le dispositif de support 14 est maintenu dans la configuration abaissée C1, à l'aide d'attaches auto-agrippantes 52 (figure 5). Les attaches auto-agrippantes 52 de type « scratch » sont prévues entre le plateau 30 et le panneau 15 et ont pour fonction d'attacher le plateau 30 au panneau 15.

En outre, dans la configuration de repos C3, le dispositif de support 14 est maintenu en position à l'aide d'un bras pivotant 53 (figures 5 et 8) et d'attaches auto-agrippantes 54 (figure 6).

Les attaches auto-agrippantes 54 de type « scratch » sont prévues entre la tablette auxiliaire 18 et un bord latéral du rail 11.

Le bras pivotant 53, réalisé de préférence sous forme d'une plaque plane rectangulaire, est apte à pivoter autour d'un axe D-D (qui est transversal, et de préférence orthogonal, audit axe longitudinal A-A), comme illustré par une double flèche ED sur la figure 8.

Le bras pivotant 53 qui est lié à une extrémité 53A par l'intermédiaire d'une charnière usuelle au panneau 15, peut être amené dans l'une ou l'autre des deux positions suivantes :
- une position escamotée, dans laquelle il est escamoté dans un logement 55 (figures 5 et 8) correspondant à une découpe pratiquée dans le panneau 15 ; et
- une position inclinée (de support) telle que représentée sur les figures 5 et 8, dans laquelle une extrémité libre 53B du bras pivotant 53 pénètre dans une ouverture 57 (figure 7) du plateau 30 du dispositif de support 14 pour maintenir le dispositif de support 14 dans ladite configuration de repos C3.

On décrit, à présent, des procédés d'installation et de désinstallation du système 1.

Le procédé pour installer le système 1 sur le tableau de bord 2 d'un aéronef, pour être utilisable par un pilote, comprend notamment les opérations (manuelles) suivantes :
- disposer le rail 11 dans la position appropriée sur le tableau de bord 2 ;
- installer la pièce d'appui 49 entre le rail 11 et la tablette 50 ;
- fixer les deux pièces de fixation 41 du système de fixation 12 sur les supports 8A et 8B des deux repose-pieds 9A et 9B destinés au pilote, en vissant les boulons 47 dans les trous préexistant des supports 8A et 8B. Pour cette dernière opération, de préférence, les pièces de fixation 41 (qui sont préalablement vissées au rail 11) sont simplement vissées aux supports 8A et 8B. En variante, il est également envisageable que les pièces de fixation 41 (qui sont préalablement vissées aux supports 8A et 8B) sont vissées au rail 11 lors de cette dernière opération.

En outre, le procédé pour désinstaller le système 1 (préalablement installé sur le tableau de bord 2), comprend notamment les opérations (manuelles) suivantes :
- dévisser les boulons 47 pour séparer les deux pièces de fixation 41 du système 1 des supports 8A et 8B des repose-pieds 9A et 9B sur lesquels ils étaient fixés ;
- enlever le rail 11 (et l'ensemble des pièces qu'il porte) ;
- enlever la pièce d'appui 49.

Par conséquent, l'installation et la désinstallation du système 1 peuvent être réalisées facilement et rapidement, avec un nombre réduit d'opérations, et de plus sans avoir à modifier le tableau de bord 2 ou des équipements du poste de pilotage 3 de l'aéronef.

Par ailleurs, pour déplacer le chariot mobile 13 (pourvu du dispositif de support 14 et de l'écran 4) d'une première position à une seconde position, par exemple de la position d'opération P1 à la position d'extrémité P2 ou inversement, il suffit de réaliser les opérations (manuelles) suivantes :
- dans la première position, desserrer l'élément de verrouillage 38 pour libérer le panneau 15 du rail 11 ;
- déplacer le chariot mobile 13 en le faisant glisser sur le rail 11 pour l'amener dans la seconde position ; et
- dans cette seconde position, visser l'élément de verrouillage 38 pour empêcher tout déplacement du chariot mobile 13.

Grâce au rail 11 qui est agencé sur le tableau de bord 2, le chariot mobile 13 peut être amené à n'importe quelle position souhaitée le long dudit rail 11, et en particulier à la position d'extrémité P2 et à la position d'opération P1 (dans laquelle l'écran 4 est positionné devant l'écran 6 usuel du poste de pilotage 3 dans l'exemple des figures 1 et 2).

Le système 1 apporte ainsi une grande flexibilité de positionnement latéral de l'écran 4 dans le poste de pilotage 3.

On décrit, à présent, des procédés pour amener le dispositif de support 14 du système 1 dans différentes configurations possibles.

Le procédé pour, notamment dans la position d'opération P1 sur le rail 11, faire passer le dispositif de support 14 de la configuration relevée C2 de la figure 1 à la configuration abaissée C1 de la figure 2, comprend notamment les opérations (manuelles) suivantes :
- agir sur la molette 64 pour permettre à la tablette de support 16 de pivoter via la charnière 19 ;
- déplacer la tablette de support 16 portant l'écran 4, en la faisant pivoter autour de l'axe B-B, pour l'amener de la position verticale (relative à la configuration relevée C2) à une position horizontale (où elle au contact de la tablette auxiliaire 18), la tablette auxiliaire 18 reposant sur le plateau 30 qui, lui, repose sur le panneau 15 liée au rail 11 ; et
- introduire la pince 24 dans l'ouverture 26 pour solidariser la tablette de support 16 de la tablette auxiliaire 18.

En outre, le procédé pour, notamment dans la position d'opération P1 sur le rail 11, faire passer le dispositif de support 14 de la configuration abaissée C1 de la figure 2 à la configuration relevée C2 de la figure 1, comprend notamment les opérations (manuelles) suivantes :
- retirer la pince 24 de l'ouverture 26 pour désolidariser la tablette de support 16 de la tablette auxiliaire 18 ;
- déplacer la tablette de support 16 portant l'écran 4, en la faisant pivoter autour de l'axe B-B, pour l'amener de la position horizontale (où elle au contact de la tablette auxiliaire 18) à la position verticale (relative à la configuration relevée C2) ; et
- agir sur la molette 64 pour empêcher la tablette de support 16 de pivoter.

Par conséquent, le changement de configuration du dispositif de support 14, notamment à la position d'opération P1, peut être réalisé facilement et rapidement, avec un nombre réduit d'opérations.

Par ailleurs, le procédé pour, dans la position d'extrémité P2 sur le rail 11, faire passer le dispositif de support 14 d'une configuration abaissée C1 telle que celle de la figure 2 à la configuration de repos C3 de la figure 5, comprend notamment les opérations (manuelles) suivantes :
- déplacer le dispositif de support 14 portant l'écran 4, en le faisant pivoter autour de l'axe C-C, pour l'amener de la position horizontale (où il repose sur le rail 11) à la position verticale (relative à la configuration de repos C3) ; et
- faire pivoter autour de l'axe D-D le bras pivotant 53, pour l'amener de la position escamotée à la position inclinée dans laquelle son extrémité libre 53B pénètre dans l'ouverture 57 du plateau 30. Dans cette position inclinée, le bras pivotant 53 maintient le dispositif de support 14 dans la configuration (verticale) de repos.

En outre, le procédé pour, dans la position d'extrémité P2 sur le rail 11, faire passer le dispositif de support 14 de la configuration de repos C3 de la figure 5 à une configuration abaissée C1 telle que celle de la figure 2, comprend notamment les opérations (manuelles) suivantes :
- faire pivoter le bras pivotant 53 de la position inclinée à la position escamotée de manière à autoriser le pivotement du dispositif de support 14 ; et
- déplacer le dispositif de support 14 portant l'écran 4, en le faisant pivoter autour de l'axe C-C, pour l'amener dans la position horizontale (relative à la configuration abaissée C1).

Par conséquent, le changement de configuration du dispositif de support 14, à la position de repos P2, peut être réalisé facilement et rapidement, avec un nombre réduit d'opérations.

Le système 1, tel que décrit ci-dessus, présente de très nombreux avantages. En particulier :
- il peut être installé sur le tableau de bord, sans modification du tableau de bord et des équipements du poste de pilotage de l'aéronef ;
- l'installation et la désinstallation du système 1 peuvent être réalisées facilement et rapidement ;
- les opérations pour l'installation et la désinstallation sont des opérations simples et peu nombreuses ;
- le système 1 présente un coût réduit ;
- le dispositif de support et l'écran peuvent être amenés dans la position souhaitée le long du rail, et en particulier dans une position adaptée au champ de vision du pilote ;
- lorsque le pilote n'a plus besoin de l'écran, la coque de support et l'écran qu'elle porte peuvent, soit être amenés dans la configuration de repos, soit être enlevés rapidement en cas d'urgence, de sorte qu'ils ne gênent pas le pilote ;
- le système 1 peut être utilisé pour un écran destiné au pilote ou pour un écran destiné au copilote ; et
- le système 1 peut être utilisé pour tout type d'écran additionnel, et en particulier pour un écran de test.

## Revendications

1. Système de fixation amovible d'au moins un écran sur un tableau de bord d'un poste de pilotage d'un aéronef, le système comportant :
- un rail (11) rectiligne présentant un axe longitudinal (A-A) ;
- un dispositif de fixation (12) destiné à fixer le rail (11) sur le tableau de bord (2) sans modification dudit tableau de bord (2) ; et
- au moins un chariot mobile (13) pourvu d'un dispositif de support (14), ledit chariot mobile (13) étant configuré pour pouvoir être translaté le long dudit rail (11) et être amené au moins dans une position dite d'opération (P1), ledit dispositif de support (14) étant pourvu d'une tablette de support (16) destinée à porter l'écran (4), le système de fixation étant **caractérisé en ce que** la tablette de support (16) est apte à pivoter autour d'un axe (B-B) parallèle audit axe longitudinal (A-A) et est configuré pour, par son pivotement, pouvoir être relevée dans une configuration dite relevée (C2), au moins dans ladite position d'opération (P1), et pouvoir être abaissée sur le chariot mobile (13) dans une configuration dite abaissée (C1), au moins lors d'une translation dudit chariot mobile (13) sur le rail (11).

2. Système selon la revendication 1, dans lequel le chariot mobile (13) est configuré pour pouvoir être amené, par translation sur le rail (11), dans une position d'extrémité (P2) sur ledit rail (11), et en ce que le dispositif de support (14) est apte à pivoter par rapport à un panneau (15) du chariot mobile (13), autour d'un axe (C-C) qui est transversal audit axe longitudinal (A-A), et il est configuré pour, par son pivotement, pouvoir, au moins dans ladite position d'extrémité (P2), être relevé dans une configuration dite de repos (C3).

3. Système selon l'une des revendications 1 et 2, dans lequel le dispositif de support (14) comprend, de plus, une tablette auxiliaire (18), et en ce que la tablette de support (16) est apte à pivoter par rapport à ladite tablette auxiliaire (18) par l'intermédiaire d'une charnière (19) agencée à un premier côté (20A), et elle est configurée pour pouvoir être amenée, par pivotement, dans l'une ou l'autre des deux configurations suivantes :
- la configuration abaissée (C1), dans laquelle la tablette de support (16) est rabattue sur la tablette auxiliaire (18) de manière à ménager entre elles un logement (21) destiné à recevoir l'écran (4) et la tablette de support (16) et la tablette auxiliaire (18) sont solidarisées à un second côté (20B) opposé audit premier côté (20A) ; et
- une configuration relevée (C2), dans laquelle la tablette de support (16) est relevée par rapport à la tablette auxiliaire (18) de sorte que la tablette de support (16) et la tablette auxiliaire (18) sont positionnées sensiblement orthogonalement l'une par rapport à l'autre.

4. Système selon la revendication 3, dans lequel une première face (18A) de la tablette auxiliaire (18) et une première face (30B) d'un plateau (30) lié à un panneau (15) du chariot mobile (13) sont en contact l'une avec l'autre et sont liées l'une à l'autre par l'intermédiaire, d'une part, d'une pluralité de pions (31) solidaires d'au moins l'une desdites premières faces (18A, 30B) qui pénètrent dans des trous (33) complémentaires et coopérants pratiqués dans l'autre desdites premières faces (18A, 30B), et d'autre part, d'au moins un ruban adhésif (32) double face, dont chaque face est collée sur l'une desdites premières faces (18A, 30B) de la tablette auxiliaire (18) et du plateau (30).

5. Système selon l'une quelconque des revendications précédentes, comprenant un élément de verrouillage (38) configuré pour pouvoir verrouiller le chariot mobile (13) en position sur le rail (11).

6. Système selon l'une quelconque des revendications précédentes, dans lequel le dispositif de fixation (12) comprend deux pièces de fixation (41) agencées sous le rail (11), en ce que chacune desdites pièces de fixation (41) comprend une face inférieure destinée à être fixée sur l'un des deux repose-pieds (9A, 9B) destinés à un pilote de l'aéronef et une face supérieure à laquelle est fixé le rail (11), et en ce que lesdites pièces de fixation (41) sont configurées de sorte que, lorsque le système de fixation (1) est monté sur le tableau de bord (2), le rail (11) est positionné sensiblement horizontalement.

7. Système selon l'une quelconque des revendications précédentes, comprenant au moins une pièce d'appui (49) agencée sous le rail (11).

8. Système selon l'une quelconque des revendications précédentes, comportant au moins un bras pivotant (53) apte à pivoter autour d'un axe (D-D) transversal audit axe longitudinal (A-A) de manière à pouvoir être amené dans l'une ou l'autre des deux positions suivantes :
- une position escamotée, dans laquelle il est escamoté dans un panneau (15) du chariot mobile (13) ; et
- une position inclinée, dans laquelle une extrémité libre (53B) du bras pivotant (53) pénètre dans une ouverture (57) d'un plateau (30) du dispositif de support (14) pour maintenir le dispositif de support (14) dans une configuration de repos (C3).

9. Système selon l'une quelconque des revendications précédentes, comportant des attaches auto-agrippantes (32, 54) pour attacher ensemble différents éléments du système (1).

10. Système de visualisation amovible pour un tableau de bord d'un poste de pilotage d'un aéronef, ledit système de visualisation (5) comportant au moins un écran (4), comprenant en outre un système (1) de fixation amovible selon l'une quelconque des revendications 1 à 9, sur lequel est fixé l'écran (4) et qui est destiné à être fixé sur le tableau de bord (2) du poste de pilotage (3) de l'aéronef.

## Patentansprüche

1. System zur lösbaren Befestigung mindestens eines Bildschirms an einem Instrumentenbrett eines Cockpits eines Luftfahrzeugs,
wobei das System umfasst:
- eine geradlinige Schiene (11), die eine Längsachse (A-A) aufweist;
- eine Befestigungsvorrichtung (12), die dazu bestimmt ist, die Schiene (11) an dem Instrumentenbrett (2) ohne Änderung des Instrumentenbretts (2) zu befestigen; und
- mindestens einen beweglichen Schlitten (13), der mit einer Halterungsvorrichtung (14) versehen ist, wobei der bewegliche Schlitten (13) dazu ausgestaltet ist, entlang der Schiene (11) verschoben werden und mindestens in eine sogenannte Betriebsposition (P1) gebracht werden zu können, wobei die Halterungsvorrichtung (14) mit einer Halterungsplatte (16) versehen ist, die dazu bestimmt ist, den Bildschirm (4) zu tragen, wobei das Befestigungssystem **dadurch gekennzeichnet ist, dass** die Halterungsplatte (16) geeignet ist, um eine parallel zu der Längsachse (A-A) verlaufende Achse (B-B) zu schwenken, und dazu ausgestaltet ist, durch ihr Schwenken mindestens in der Betriebsposition (P1) in eine sogenannte angehobene Konfiguration (C2) angehoben werden zu können und auf dem beweglichen Schlitten (13) mindestens bei einem Verschieben des beweglichen Schlittens (13) auf der Schiene (11) in eine sogenannte abgesenkte Konfiguration (C1) abgesenkt werden zu können.

2. System nach Anspruch 1,
wobei der bewegliche Schlitten (13) dazu ausgestaltet ist, durch Verschieben auf der Schiene (11) in eine Endposition (P2) auf der Schiene (11) gebracht werden zu können, und dadurch, dass die Halterungsvorrichtung (14) dazu geeignet ist, in Bezug auf eine Fläche (15) des beweglichen Schlittens (13) um eine Achse (C-C) zu schwenken, die quer zu der Längsachse (A-A) verläuft, und dazu ausgestaltet ist, durch ihr Schwenken mindestens in der Endposition (P2) in eine sogenannte Ruhekonfiguration (C3) angehoben werden zu können.

3. System nach einem der Ansprüche 1 und 2,
wobei die Halterungsvorrichtung (14) ferner eine Hilfsplatte (18) umfasst, und dadurch, dass die Halterungsplatte (16) dazu geeignet ist, in Bezug auf die Hilfsplatte (18) über ein auf einer ersten Seite (20A) angeordnetes Scharnier (19) zu schwenken, und dazu ausgestaltet ist, durch Schwenken in die eine oder die andere der beiden folgenden Konfigurationen gebracht werden zu können:
- die abgesenkte Konfiguration (C1), in der die Halterungsplatte (16) auf die Hilfsplatte (18) geklappt ist, so dass zwischen ihnen eine Aufnahme (21) gebildet wird, die dazu bestimmt ist, den Bildschirm (4) aufzunehmen, und die Halterungsplatte (16) und die Hilfsplatte (18) an einer zur ersten Seite (20A) entgegengesetzten zweiten Seite (20B) befestigt sind; und
- eine angehobene Konfiguration (C2), in der die Halterungsplatte (16) in Bezug auf die Hilfsplatte (18) angehoben ist, so dass die Halterungsplatte (16) und die Hilfsplatte (18) im Wesentlichen orthogonal zueinander positioniert sind.

4. System nach Anspruch 3,
wobei eine erste Seite (18A) der Hilfsplatte (18) und eine erste Seite (30B) einer Platte (30), die mit einer Fläche (15) des beweglichen Schlittens (13) verbunden ist, miteinander in Kontakt sind und miteinander verbunden sind über einerseits eine Mehrzahl von Stiften (31), die an mindestens einer der ersten Seiten (18A, 30B) befestigt sind und die komplementäre und zusammenwirkende Löcher (33) eindringen, die in der anderen der ersten Seiten (18A, 30B) ausgebildet sind, und andererseits mindestens ein doppelseitiges Klebeband (32), von dem jede Seite auf eine der ersten Seiten (18A, 30B) der Hilfsplatte (18) und der Platte (30) geklebt ist.

5. System nach einem der vorhergehenden Ansprüche,
das ein Verriegelungselement (38) aufweist, das dazu ausgestaltet ist, den beweglichen Schlitten (13) in Position auf der Schiene (11) verriegeln zu können.

6. System nach einem der vorhergehenden Ansprüche, wobei die Befestigungsvorrichtung (12) zwei unter der Schiene (11) angeordnete Befestigungsteile (41) aufweist, dadurch, dass jedes der Befestigungsteile (41) eine untere Seite aufweist, die dazu bestimmt ist, an einer der beiden Fußstützen (9A, 9B) befestigt zu werden, die für einen Piloten des Luftfahrzeugs bestimmt sind, und eine obere Seite, an der die Schiene (11) befestigt ist, und dadurch, dass die Befestigungsteile (41) so ausgestaltet sind, dass, wenn das Befestigungssystem (1) an dem Instrumentenbrett (2) montiert ist, die Schiene (11) im Wesentlichen horizontal positioniert ist.

7. System nach einem der vorhergehenden Ansprüche,
das mindestens ein unter der Schiene (11) angeordnetes Stützteil (49) aufweist.

8. System nach einem der vorhergehenden Ansprüche, umfassend mindestens einen Schwenkarm (53), der dazu geeignet ist, um eine quer zu der Längsachse (A-A) verlaufende Achse (D-D) zu schwenken, so dass er in die eine oder die andere der beiden folgenden Positionen gebracht werden kann:
- eine eingezogene Position, in der er in eine Fläche (15) des beweglichen Schlittens (13) eingezogen ist; und
- eine geneigte Position, in der ein freies Ende (53B) des Schwenkarms (53) in eine Öffnung (57) einer Platte (30) der Halterungsvorrichtung (14) eindringt, um die Halterungsvorrichtung (14) in einer Ruhekonfiguration (C3) zu halten.

9. System nach einem der vorhergehenden Ansprüche, das Klettverschlüsse (32, 54) zum Befestigen verschiedener Elemente des Systems (1) aneinander umfasst.

10. Lösbares Anzeigesystem für ein Instrumentenbrett eines Cockpits eines Luftfahrzeugs, wobei das Anzeigesystem (5) mindestens einen Bildschirm (4) beinhaltet,
aufweisend ferner ein System (1) zur lösbaren Befestigung nach einem der Ansprüche 1 bis 9, an dem der Bildschirm (4) befestigt ist und das dazu bestimmt ist, an dem Instrumentenbrett (2) des Cockpits (3) des Luftfahrzeugs befestigt zu werden.

## Claims

1. System for removably fastening at least one screen to an instrument panel of a cockpit of an aircraft,
the system comprising:
- a rectilinear rail (11) having a longitudinal axis (A-A) ;
- a fastening device (12) intended to fasten the rail (11) to the instrument panel (2) without modification of said instrument panel (2); and
- at least one movable carriage (13) provided with a support device (14), said movable carriage (13) being configured to be able to be moved in translation along said rail (11) and to be brought at least into what is referred to as an operation position (P1), said support device (14) being provided with a support bracket (16) intended to bear the screen (4), the fastening system being **characterized in that** the support bracket (16) is able to pivot about an axis (B-B) parallel to said longitudinal axis (A-A) and is configured to, by the pivoting thereof, be able to be raised into what is referred to as a raised configuration (C2), at least in said operation position (P1), and to be able to be lowered on the movable carriage (13) into what is referred to as a lowered configuration (C1), at least during a translational movement of said movable carriage (13) on the rail (11).

2. System according to Claim 1,
wherein the movable carriage (13) is configured to be able to be brought, by translational movement on the rail (11), into an end position (P2) on said rail (11), and in that the support device (14) is able to pivot with respect to a panel (15) of the movable carriage (13), about an axis (C-C) which is transverse to said longitudinal axis (A-A), and it is configured to, by the pivoting thereof, be able, at least in said end position (P2), to be raised into what is referred to as a rest configuration (C3).

3. System according to either of Claims 1 and 2,
wherein the support device (14) additionally comprises an auxiliary bracket (18), and in that the support bracket (16) is able to pivot with respect to said auxiliary bracket (18) by way of a hinge (19) arranged at a first side (20A), and it is configured to be able to be brought, by pivoting, into one or the other of the two following configurations:
- the lowered configuration (C1), in which the support bracket (16) is folded down on the auxiliary bracket (18) so as to create between them a receptacle (21) intended to receive the screen (4) and the support bracket (16) and the auxiliary bracket (18) are secured to one another at a second side (20B) on the opposite side from said first side (20A); and
- a raised configuration (C2), in which the support bracket (16) is raised with respect to the auxiliary bracket (18) such that the support bracket (16) and the auxiliary bracket (18) are positioned substantially orthogonally with respect to one another.

4. System according to Claim 3,
wherein a first face (18A) of the auxiliary bracket (18) and a first face (30B) of a plate (30) connected to a panel (15) of the movable carriage (13) are in contact with one another and are connected to one another by way of, for the one part, a plurality of pins (31) which are secured to at least one of said first faces (18A, 30B) and enter complementary and cooperating holes (33) provided in the other of said first faces (18A, 30B), and, for the other part, at least one double-sided adhesive strip (32), each face of which is adhesively bonded to one of said first faces (18A, 30B) of the auxiliary bracket (18) and of the plate (30).

5. System according to any one of the preceding claims, comprising a locking element (38) configured to be able to lock the movable carriage (13) in position on the rail (11).

6. System according to any one of the preceding claims, wherein the fastening device (12) comprises two fastening components (41) arranged below the rail (11), in that each of said fastening components (41) comprises a lower face intended to be fastened to one of the two footrests (9A, 9B) intended for a pilot of the aircraft and an upper face to which the rail (11) is fastened, and in that said fastening components (41) are configured such that, when the fastening system (1) is mounted on the instrument panel (2), the rail (11) is positioned substantially horizontally.

7. System according to any one of the preceding claims, comprising at least one bearing component (49) arranged below the rail (11).

8. System according to any one of the preceding claims, comprising at least one pivoting arm (53) able to pivot about an axis (D-D) transverse to said longitudinal axis (A-A) so as to be able to be brought into one or the other of the two following positions:
- a retracted position, in which it is retracted in a panel (15) of the movable carriage (13); and
- an inclined position, in which a free end (53B) of the pivoting arm (53) enters an opening (57) in a plate (30) of the support device (14) in order to hold the support device (14) in a rest configuration (C3).

9. System according to any one of the preceding claims, comprising self-gripping attachment means (32, 54) for attaching together different elements of the system (1).

10. Removable visualization system for an instrument panel of a cockpit of an aircraft, said visualization system (5) comprising at least one screen (4),
further comprising a system (1) for removable fastening according to any one of Claims 1 to 9, to which the screen (4) is fastened and which is intended to be fastened to the instrument panel (2) of the cockpit (3) of the aircraft.
